# EUROPÄISCHE PATENTANMELDUNG

(11) **EP 3 789 616 A1**
(43) Veröffentlichungstag der Anmeldung: **10.03.2021**
(21) Anmeldenummer: 19196104.4
(22) Anmeldetag: 09.09.2019
(51) Int. Cl.: F04D 17/10, F04D 29/70

(54) **VERFAHREN ZUR VERDICHTUNG VON WASSERSTOFF, ANORDNUNG**

(71) Anmelder: Siemens Aktiengesellschaft, 80333 München (DE)
(72) Erfinder: Keil, Jörg, 42781 Haan (DE); Wolf, Erik, 91341 Röttenbach (DE)

(57) **Zusammenfassung**

Die Erfindung betrifft ein Verfahren zur Verdichtung von Wasserstoff (H₂). Zur Effizienzverbesserung umfasst es die folgenden Schritte:
a) Bereitstellen von gasförmigen Wasserstoff (H₂),
b) Beimischung eines Fluids (FLD) mit höherer Dichte als Wasserstoff (H₂),
c) Verdichtung des Gemischs (H2FLD) mittels einer Verdichtungsanlage (CMP),
d) Abtrennen des Fluids (FLD) aus dem Gemisch (H2FLD) um im Wesentlichen reinen Wasserstoff (H₂) zu erhalten.

Daneben betrifft die Erfindung auch eine Anordnung (ARG) zur Durchführung des Verfahrens.

## Beschreibung

Die Erfindung betrifft ein Verfahren zur Verdichtung von Wasserstoff.

Die Verdichtung von Wasserstoff, insbesondere bei größeren Volumenströmen, ist aufgrund des geringen Molgewichtes (auch als molare Masse, Molmasse, Molgewicht oder stoffmengenbezogene Masse bezeichnet) technisch anspruchsvoll. Während kleinere Volumenströme mittels Kolbenverdichtern auf höhere Drücke gefördert werden können, werden zur Verdichtung größerer Gasvolumina in der Regel Turbomaschinen eingesetzt. Bei Turboverdichtern wirkt sich das geringe Molgewicht des Wasserstoffs besonders negativ aus, so dass man beispielsweise mit einem Verdichter, der in einem Gehäuse acht Laufräder aufweist, bei einer Umfangsgeschwindigkeit von 295m/s. häufig nur ein Druckverhältnis von etwa 1,3 erzielt. Insofern ist die Verdichtung von gasförmigen Wasserstoffmengen sehr energieaufwendig und erfordert eine verhältnismäßig umfängliche Verdichtungsanlage. Kolben- und Membrankompressoren sind für die Verdichtung größerer Gasvolumina eher ungeeignet.

Die Speicherung oder der Transport von Wasserstoff bei Umgebungsdruck ist wegen der geringen Dichte bzw. des großen Volumens verhältnismäßig unwirtschaftlich. Daher ist eine Verdichtung nahezu unumgänglich.

Um die direkte Verdichtung von elementarem Wasserstoff zu umgehen aber auch aus anderen Prozesserwägungen heraus, erfolgt häufig schon die Erzeugung des Wasserstoffs unter erhöhtem Druck. Beispielsweise kann in sogenannten protonendurchlässigen Polymermembran-Hochdruckelektrolyseuren (PEM-Elektrolyseur) elementarer Wasserstoff bei einem Druck von 30bar - 50bar hergestellt werden.

Hierbei entspricht das hohe Druckniveau, dem gewünschten Enddruck des Wasserstoffgases. Die Investitionskosten in eine entsprechend druckfeste Anlage sind vergleichsweise höher als bei einer Elektrolyseanlage, die bei Umgebungsdruck arbeitet. Daneben erfordert die Hochruckelektrolyse zusätzliche Pumpsysteme und ist infolge der Komplexität von geringerer Verfügbarkeit. Eine andere vergleichbare bekannte technische Lösung zur Herstellung von Wasserstoff bei einem hohen Druck ist ein Steam-Reforming-Prozess, der einen Ausgangsdruck von etwa 20 bis 60bar bereitstellen kann. Dieses Verfahren ist allerdings energieaufwendig. Darüber hinaus fallen pro Kilogramm elementaren Wasserstoffs etwa zehn Kilogramm CO2 an, so dass dieses Verfahren nicht nur energetisch verhältnismäßig unwirtschaftlich ist, sondern auch nicht mit gegenwärtigen Klimaschutzbestrebungen im Einklang steht.

Aus der EP 2 803 755 A1 ist bereits das Verfahren der beschriebenen Hochdruckelektrolyse bekannt.
Aus der US 3,361,534 A ist bereits die Herstellung von Wasserstoff mittels des Steam-Reforming-Prozesses bekannt.

Die Erfindung hat es sich zur Aufgabe gemacht, die bisherigen Nachteile bei der Erzeugung von Hochdruck-Wasserstoff zu reduzieren. Insbesondere ist es Aufgabe der Erfindung, einen weniger energieaufwendigen Weg aufzuzeigen, der bei geringerem Installationsbedarf die Bereitstellung von Wasserstoff auf einem höheren Druckniveau ermöglicht. Grundsätzlich ist es sinnvoll, Wasserstoff auf einem Druckniveau oberhalb bzw. signifikant oberhalb des Umgebungsdrucks zur Verfügung zu stellen, damit es wirtschaftliche Möglichkeiten zur Speicherung und zum Transport des Wasserstoffs gibt.

Zur Lösung der erfindungsgemäßen Aufgabe schlägt die Erfindung ein Verfahren der eingangs genannten Art mit den zusätzlichen Merkmalen des Verfahrensanspruchs vor. Daneben schlägt die Erfindung eine Anordnung zur Durchführung des erfindungsgemäßen Verfahrens vor.

Die jeweils rückbezogenen Unteransprüche stellen vorteilhafte Weiterbildungen der Erfindung dar.

Das Molgewicht des Wasserstoffgases wird mittels der Beimischung des Fluides, das eine höhere Dichte hat als der elementare Wasserstoff, signifikant erhöht, so dass der resultierende Gasstrom bevorzugt vor Eintritt in den Kompressionspfad (Rotor/Stator) ein für die Turboverdichtung übliches Niveau von größer als 2 Kg/mol aufweist. Auf diese Weise ist es einfacher möglich, mittels des Rotors auf das Gasgemisch eine kinematische Energie zu übertragen, die für den Druckaufbau erforderlich ist, insbesondere bei einer Verdichtung mittels eines Radialverdichters bzw. Zentrifugalverdichters.

Das vor der Verdichtung zur Anhebung des Molgewichtes erforderliche Fluid sollte bevorzugt in gasförmigem Zustand (bei Wasser als Dampf) in den auf ein ähnliches Temperaturniveau vorgewärmten Wasserstoffstrom eingemischt werden, um eine mögliche Beschädigung oder einen erhöhten Verschleiß an den Verdichter Laufrädern durch Kondensatausfall und anschließende Tröpfchen-Erosion zu vermeiden.

Es ist sinnvoll, wenn eine Anhebung der Temperatur des elementaren Wasserstoffs vor der Beimischung erfolgt oder das einzumischende Fluid so heiß ist, dass die Mischtemperatur des resultierenden Gases über Taupunkttemperatur liegt.

Zwischen den Laufrädern kann vorteilhaft zusätzlich Fluid dem Wasserstoff zugesetzt werden, um das sich bei der Verdichtung erwärmende Gas abzukühlen. Hierbei soll die Menge der Beimischung so dosiert sein, dass eine reine Gasphase bzw. eine vollständige Verdampfung gewährleistet ist. Falls als Fluid zur Kühlung Wasser verwendet wird kann im Sinne einer bestmöglichen Kühlung zwischen den Laufräder flüssiges Wasser beigemischt werden.

Das Fluid verdampft und entzieht dem Wasserstoffstrom die nicht benötigte Wärmemenge. Bei der Verwendung von Wasser als kühlendes Fluid ist eine geringe Erwärmung des Gasstroms mit fortschreitender Komprimierung erforderlich, um bei steigenden Zwischendrücken über der Taupunkttemperatur zu bleiben und einen Kondensatausfall zu vermeiden. Bei mehreren Verdichterstufen ist eine Rückkühlung zwischen den Stufen sinnvoll, um das Gas auf Taupunkttemperatur der nächsten Verdichterstufe zurück zu kühlen. So können die Endtemperaturen auf einem üblichen Niveau von Turboverdichtern gehalten und der Wirkungsgrad optimiert werden.

Eine Verdampfung oder zumindest eine teilweise Verdampfung des beigemischten Fluids vor der Verdichtung in dem Turboverdichter oder zumindest während der Verdichtung muss in dem Turboverdichter gewährleistet sein. In die der Verdampfung des beigemischten Fluids zu Grunde liegende Energiebilanz kann auch die mittels der Verdichtung bzw. mittels des Verdichters zugeführte Energie einbezogen werden, die in Folge von inneren Reibungsprozessen bei der Durchströmung des Turboverdichters in Wärme umgewandelt wird.

Grundsätzlich ist es auch denkbar, dass das beigemischte Fluid vor der Einspritzung erhitzt wird, so dass ohne weitere energetische Zuführung das Fluid bei dem Prozess der Vermischung mit dem Wasserstoff sofort verdampft. Als Fluidbeimischung sind verschiedene Fluide mit jeweils höherem molekularem Gewicht als elementarer Wasserstoff geeignet, insbesondere geeignet ist Wasser. Wasser ist in der Regel besonders gut und günstig verfügbar, ist nicht toxisch und kann bei technisch einfach beherrschbaren Temperaturen von einer gasförmigen Phase in eine flüssige Phase und umgekehrt überführt werden. Aufgrund teilweise vergleichbarer Erwägungen ist auch Kohlenstoffdioxid oder Stickstoff oder Schwefelhexaflurid oder ein beliebiges Gemisch aus diesen Gasen ein geeignetes Fluid zur Beimischung.

Die Bereitstellung des Wasserstoffs kann mittels einer Elektrolyse erfolgen, insbesondere mittels einer Elektrolyse bei Umgebungsdruck oder in einem Druckbereich zwischen 0bar - 10bar Überdruck. Besonders bevorzugt verdichtet der nach dem erfindungsgemäßen Verfahren betriebene Turboverdichter den Wasserstoff bzw. das Gemisch, das den Wasserstoff enthält, auf einen Enddruck von mindestens 30bar - 70bar.

Der Verfahrensschritt zur Abscheidung des beigemischten Fluids umfasst besonders bevorzugt einen Abkühlprozess, bei dem das beigemischte Fluid aus dem Gemisch auskondensiert.

Es ist besonders sinnvoll, die dem Verdichtungsprozess entzogene Wärme für die Vorwärmung des elementaren Wasserstoffes oder des einzumischenden Fluids zur Erhöhung der Molmasse am Anfang des Verdichtungsprozesses oder die erhöhte Temperatur des fertig verdichteten Gemischs zur Vorwärmung des Wasserstoffs bevorzugt vor der Beimischung des Fluids zu nutzen. Anschließend an den Verdichtungs- und Abtrennprozess kann der elementare Wasserstoff auf dem erhöhten Druckniveau gespeichert oder transportiert werden.

In dem folgenden Ausführungsbeispiel ist unter Bezugnahme auf eine Zeichnung die Erfindung näher erläutert. Es zeigen:
- Figur 1: ein schematisches Ablaufschema des erfindungsgemäßen Verfahrens unter Einsatz einer erfin dungsgemäßen Anordnung zur Durchführung des Verfahrens,
- Figur 2: ein schematisches Ablaufschema der Schritte b) - d) aus Figur 1 des erfindungsgemäßen Verfahrens.

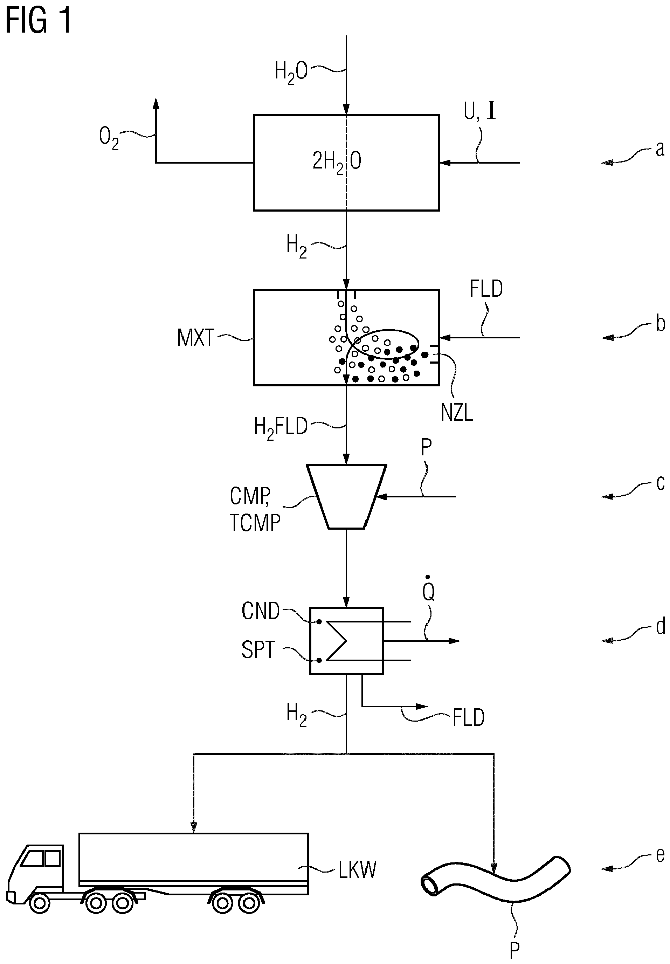

Das erfindungsgemäße Verfahren sieht in einem ersten Verfahrensschritt a) vor, dass elementarer Wasserstoff H₂ bereitgestellt wird. Figur 1 zeigt hierzu schematisch eine Elektrolyse von Wasser H₂O unter Zufuhr elektrischen Stroms U, I, so dass Wassermoleküle H₂O zerlegt werden in Sauerstoff O₂ und Wasserstoff H₂. Diese Elektrolyse kann bei Umgebungsdruck oder geringfügig erhöhtem Druck gegenüber der Umgebung erfolgen.

In einem zweiten Verfahrensschritt b) folgt eine Vermischung des elementaren Wasserstoffs H₂ mit einem Fluid FLD in einem Mischer MXT. Das Fluid FLD weist eine höhere Moldichte auf als der Wasserstoff, so dass das resultierende Gemisch ein höheres Molgewicht aufweist, das für eine Verdichtung mittels eines Turboverdichters geeignet ist.

In einem dritten Verfahrensschritt c) erfolgt die Verdichtung des Gemischs H₂FLD mittels einer Verdichtungsanlage CMP, nämlich eines Turboverdichters TCMP unter Zufuhr einer mechanischen Leistung P auf ein höheres Druckniveau. Der Enddruck der Verdichtung beträgt mindestens 5bar - 70bar.

In dem anschließenden vierten Verfahrensschritt d) erfolgt die Abscheidung des beigemischten Fluids FLD aus dem Gemisch H₂FLD in einem Kondensator CND unter Entzug von Wärmeenergie Q. Der Entzug der Wärmeenergie Q führt zu Kondensation des zugesetzten Fluids FLD, so dass der Wasserstoff H₂ unter dem erhöhten Druck nach der Verdichtung in elementarer Form vorliegt. In einem anschließenden Verfahrensschritt e) erfolgt eine Speicherung oder ein Transport des Wasserstoffs H₂ beispielweise mittels Lastkraftwagen LKW oder einer Pipeline PLP.

Die in der Figur 1 gezeigte schematische Anordnung ARG zur Durchführung des Verfahrens weist ein Mischungsaggregat MXT auf zur Beimischung des Fluids FLD mit höherer Dichte als Wasserstoff H2, einen Turboverdichter TCMP zur Verdichtung des Gemischs H2FLD, und einen Abscheider SPT zur Abtrennung des Fluids FLD aus dem Gemisch H2FLD um im Wesentlichen reinen Wasserstoff H2 zu erhalten.
Der Abscheider SPT ist als Kondensator CND ausgebildet. Das Mischungsaggregat MXT ist mit Düsen NZL ausgebildet zum Beimischen eines Fluids mittels Eindüsens.

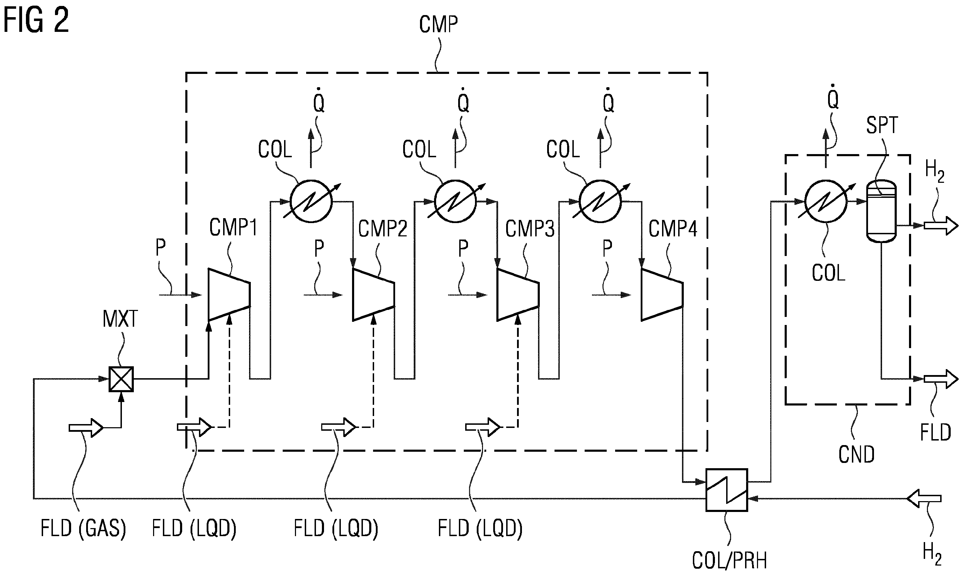

Die schematische Darstellung der Figur 2 zeigt das Ablaufschema der Schritte b) - d) aus der Figur 1 des erfindungsgemäßen Verfahrens mit weiteren möglichen Einzelheiten, insbesondere hinsichtlich der Verdichteranordnung. Der elementare Wasserstoff H2 wird zunächst einem Vorwärmer PRH zugeführt, bevor stromabwärts dem Wasserstoff H2 das Fluid FLD in einem Mischer MXT zugeführt wird. Das Fluid FLD ist hierbei gasförmig FLD (Gas). Als beigemischtes Fluid kommt grundsätzlich jedes Fluid mit einer höheren Dichte als Wasserstoff in Frage, besonders bevorzugt sind Wasser H2O, Stickstoff N2, Kohlenstoffdioxid CO2 oder Schwefelhexafluorid SF6. Sollte als beigemischtes Fluid Schwefelhexafluorid SF6 vorgesehen werden, so sind besondere Maßnahmen empfehlenswert, dass kein Schwefelhexafluorid SF6 in die Umgebung entweicht, weil dieses Gas besonders klimawirksam ist. Stromabwärts der Beimischung wird das Gasgemisch in verschiedenen Verdichtern CMP1, CMP2, CMP3, CMP4 einer Verdichtungsanlage CMP verdichtet. Die ersten drei Verdichter CMP1, CMP2, CMP3 weisen jeweils eine Zuspeisung für flüssiges Fluid FLD (LQD) auf, zur Kühlung des Verdichtungsprozesses. Zur zusätzlichen Kühlung sind stromabwärts der einzelnen Verdichter CMP1 - CMP4 jeweils Kühler COL vorgesehen, die eine Abfuhr von Wärmeenergie Q aus dem zu verdichtenden Gasgemisch vorsehen. Der Kühler COL stromabwärts des letzten bzw. vierten Verdichters CMP4 ist gleichzeitig als Vorwärmer PRH für das neu in den Prozess eintretende Wasserstoffgas H2 ausgebildet. Die einzelnen Verdichter CMP1 - CMP4 werden mittels mechanischer Leistung P angetrieben. Stromabwärts des letzten Kühlers COL bzw. Vorwärmers PRH erreicht das verdichtete Gasgemisch eine Anordnung, die zur Abscheidung des zugespeisten Fluids FLD aus dem elementaren Wasserstoff H2 dient. Diese Anordnung ist insgesamt als Kondensator CND in der Figur 2 bezeichnet, ebenso wie in Figur 1. Grundsätzlich kann die Abscheidung auch auf eine andere Weise als mittels Kondensation erfolgen, beispielsweise mittels einer Zentrifuge bei entsprechenden Dichtunterschieden zwischen dem elementaren Wasserstoff H2 und dem beigemischten Fluid FLD. In dem Beispiel der Figur 2 wird mittels eines Kühlers COL die Wärmeenergie Q aus dem Gasgemisch entzogen und stromabwärts wird das Gasgemisch in einen Separator SPT bei Abscheidung des Fluids FLD aus dem elementaren Wasserstoff H2 gegeben.

Die erfindungsgemäße Einspritzung des gasförmigen Fluids FLD (Gas) in den Mischer MXT erfolgt zur Erhöhung der Molmasse, damit die Turboverdichter bzw. Verdichter CMP1 - CMP4 eine effiziente Verdichtung des Gasgemisches durchführen können. Die stromabwärtigen Zuspeisungen von flüssigen Fluid FLD (LQD) erfolgen im Wesentlichen zur Kühlung des Gasgemisches, um die Effizienz der Verdichtung mittels der Verdichtungsanordnung CMP zu gewährleisten. Die Verdichtung des Gasgemisches mittels der vier Verdichter CMP1 - CMP4 erfolgt stufenweise, beispielsweise im ersten Verdichter von einem Druck von 1,1 bar auf einen Druck von 3,5 bar und in dem zweiten Verdichter CMP2 von einem Druck von 3,5 bar auf einem Druck von 10 bar und in dem dritten Verdichter CMP3 von einem Druck von 10 bar auf einem Druck von 31 bar und in dem vierten Verdichter CMP4 von einem Druck von 31 bar auf einem Druck von mindestens von 90 bar.

## Patentansprüche

1. Verfahren zur Verdichtung von Wasserstoff (H₂) umfassend die folgenden Schritte:
a) Bereitstellen von gasförmigem Wasserstoff (H₂),
b) Beimischung eines Fluids (FLD) mit höherer Dichte als Wasserstoff (H₂),
c) Verdichtung des Gemischs (H2FLD) mittels einer Verdichtungsanlage (CMP),
d) Abtrennen des Fluids (FLD) aus dem Gemisch (H2FLD) um im Wesentlichen reinen Wasserstoff (H₂) zu erhalten.

2. Verfahren nach Anspruch 1,
wobei zur Verdichtung ein Verdichter (CMP) ausgebildet als Turboverdichter (TCP) verwendet wird.

3. Verfahren nach einem der Ansprüche 1, 2,
wobei als beigemischtes Fluid (FLD) Wasser und/oder Kohlenstoffdioxid und/oder Stickstoff und/ Schwefelhexaflourid verwendet wird.

4. Verfahren nach mindestens einem der vorhergehenden Ansprüche 1 bis 3,
wobei die Beimischung des Fluides mittels einer Eindüsung von flüssigem Fluid (FLD) erfolgt, wobei das flüssige Fluid bei der Eindüsung in Tröpfchen zerstäubt wird.

5. Verfahren nach mindestens einem der vorhergehenden Ansprüche 1 bis 3,
wobei die Beimischung des Fluides mittels einer Eindüsung von gasförmigem Fluid (FLD) erfolgt.

6. Verfahren nach mindestens einem der vorhergehenden Ansprüche 1 bis 5,
wobei vor der Verdichtung die Saugtemperatur des Wasserstoffs (H₂) auf eine Temperatur angehoben wird, die über einer Verdampfungstemperatur des beigemischten Fluides (FLD) liegt, so dass das beigemischte Fluid (FLD) in dem Verdichter (CMP) zumindest teilweise verdampft.

7. Verfahren nach mindestens einem der vorhergehenden Ansprüche 1 bis 6,
wobei nach der Beimischung des Fluides (FLD) das Molgewicht des Gemisches auf mindestens 2 kg/mol erhöht ist.

8. Verfahren nach mindestens einem der vorhergehenden Ansprüche 1 bis 7,
wobei das Druckverhältnis der Verdichtung des Gemischs (H₂FLD) mindestens 1,2 beträgt, bevorzugt mindestens 2,0.

9. Verfahren nach mindestens einem der vorhergehenden Ansprüche 1 bis 8,
wobei die Abscheidung des Fluides (FLD) aus dem Gemisch (H₂FLD) mittels einer Kondensation in einem Kondensator (CND) erfolgt.

10. Anordnung (ARG) zur Durchführung des Verfahrens nach mindestens einem der vorhergehenden Ansprüche 1 bis 9, wobei die Anordnung (ARG) ein Mischungsaggregat (MXT) aufweist zur Beimischung des Fluids (FLD) mit höherer Dichte als Wasserstoff (H₂)
wobei die Anordnung (ARG) einen Turboverdichter (TCMP) aufweist zur Verdichtung des Gemischs (H2FLD),
wobei die Anordnung (ARG) einen Abscheider (SPT) aufweist zur Abtrennung des Fluids (FLD) aus dem Gemisch (H2FLD) um im Wesentlichen reinen Wasserstoff (H₂) zu erhalten.

11. Anordnung (ARG) nach mindestens dem vorhergehenden Anspruch 10,
wobei der Abscheider (SPT) als Kondensator (CND) ausgebildet ist.

12. Anordnung (ARG) nach mindestens einem der vorhergehenden Ansprüche 10 oder 11,
wobei das Mischungsaggregat (MXT) mit Düsen (NZL) ausgebildet ist zum Beimischen eines Fluids mittels Eindüsens.
